# EUROPÄISCHE PATENTSCHRIFT

(11) **EP 2 340 145 B1**
(45) Veröffentlichungstag und Bekanntmachung des Hinweises auf die Patenterteilung: **03.07.2013**
(21) Anmeldenummer: 09783636.5
(22) Anmeldetag: 01.10.2009
(51) Int. Cl.: B23Q 1/76, B23B 13/12

(54) **DREHMASCHINE**
LATHE
TOUR

(30) Priorität: 07.10.2008 DE 102008051611
(43) Veröffentlichungstag der Anmeldung: 06.07.2011
(73) Patentinhaber: Traub Drehmaschinen GmbH & Co. KG, 73262 Reichenbach an der Fils (DE)
(72) Erfinder: BAUMANN, Ulrich, 73252 Lenningen (DE)
(74) Vertreter: Hoeger, Stellrecht & Partner Patentanwälte
(86) Internationale Anmeldenummer: PCT/EP2009/062746
(87) Internationale Veröffentlichungsnummer: WO 2010/040680

(56) Entgegenhaltungen:
- EP-A- 1 704 950
- EP-A2- 1 281 473
- JP-A- 9 225 703
- US-A1- 2007 227 317

## Beschreibung

Die Erfindung betrifft eine Drehmaschine umfassend ein Maschinengestell, eine an dem Maschinengestell angeordnete Werkstückspindeleinheit mit einem Werkstückspindelgehäuse und mit einer in dem Werkstückspindelgehäuse um eine Werkstückspindelachse rotierend antreibbaren Werkstückspindel, eine am Maschinengestell angeordnete Abstützeinheit mit einer Lagerkörperaufnahme, in welcher in einer Langdreherversion der Drehmaschine eine Langdrehführungsbüchse im Bereich ihrer Werkstückaufnahme radial zur Werkstückspindelachse am Maschinengestell abstützbar und um die Werkstückspindelachse drehbar ist.

Es sind sogenannte Langdrehmaschinen bekannt, bei welchen die Werkstückaufnahme von einer Langdrehführungsbüchse umfasst ist, die ihrerseits an der Abstützeinheit gehalten ist und damit selbst an dem Maschinengestell unmittelbar abgestützt ist, wobei eine derartige stationäre Langdrehführungsbüchse dazu dient, das Werkstück, insbesondere eine Werkstoffstange, möglichst nahe an einer zu bearbeitenden Stelle radial zur Werkstückspindelachse stabil zu führen. Bei einer derartigen Langdrehmaschine dient die Werkstückspindel ihrerseits nur dazu, das Werkstück, insbesondere die Werkstoffstange, relativ zur Langdrehführungsbüchse in Z-Richtung zu verschieben und für die Drehbearbeitung rotierend anzutreiben.

Mit einer derartigen Langdrehmaschine kann lediglich eine begrenzte Zahl von Werkstücken günstig und vorteilhaft bearbeitet werden.

Aus der JP 09 225 703 A ist eine Drehmaschine bekannt, die auch in einer Kurzdreherversion betrieben werden kann, wobei in der Kurzdreherversion die Lagerkörperaufnahme durch eine Abdeckung geschützt ist.

Aus der EP 1 704 950 A1 ist eine Drehmaschine nach dem Oberbegriff des Anspruchs 1 bekannt, die auch in einer Kurzdreherversion betrieben werden kann, wobei in der Kurzdreherversion ein Spindelrohr über das Drehlager für die Langdrehführungsbüchse drehbar in der Lagerkörperaufnahme abstützbar ist.

Der Erfindung liegt daher die Aufgabe zugrunde, eine derartige Drehmaschine, bei welcher in einfacher Weise andere Drehbearbeitungen als Langdrehen möglich sind, weiter zu verbessern.

Diese Aufgabe wird bei einer Drehmaschine der Eingangs beschriebenen Art erfindungsgemäß dadurch gelöst, dass die Langdrehführungsbüchse um die Werkstückspindelachse drehbar ist, dass in der Lagerkörperaufnahme in einer Kurzdreherversion der Drehmaschine die Werkstückspindeleinheit durch Abstützung eines Lagerrohrs des Werkstückspindelgehäuses im Bereich ihrer Werkstückaufnahme radial zur Werkstückspindelachse abstützbar sind.

Der Vorteil der erfindungsgemäßen Lösung ist somit darin zu sehen, dass diese die Möglichkeit bietet, eine Drehmaschine in Langdreherversion mit wenig Aufwand in eine Kurzdreherversion umzubauen und somit bei derselben Maschine zum einen die Möglichkeiten einer Kurzdreherversion einer Drehmaschine und zum anderen die Möglichkeiten einer Langdreherversion mit geringem Umbauaufwand optimal ausnützen zu können.

Insbesondere ist bei dieser Lösung die Möglichkeit gegebenen, rasch einen Umbau von der Langdreherversion in die Kurzdreherversion oder umgekehrt vornehmen zu können, ohne dass essentielle, die Genauigkeit bestimmende Teile der Drehmaschine, wie die Werkstückspindeleinheit oder die Abstützeinheit, ab- oder umgebaut werden müssen.

Besonders einfach und günstig lässt sich die wechselweise Abstützung der Langdrehführungsbüchse oder der Werkstückspindeleinheit in der Lagerkörperaufnahme dadurch realisieren, dass in die Lagerkörperaufnahme ein die Langdrehführungsbüchse oder ein die Werkstückspindeleinheit abstützender Lagerkörper lösbar einsetzbar ist.

Mit derartigen entweder die Langdrehführungsbüchse oder die Werkstückspindeleinheit abstützenden Lagerkörpern, die jeweils lösbar in die Lagerkörperaufnahme einsetzbar sind, lässt sich in einfacher Weise ein Umbau realisieren, ohne dass ein großer Aufwand für den Umbau notwendig ist.

Besonders günstig ist es, wenn der Lagerkörper in der Lagerkörperaufnahme durch radial zur Werkstückspindelachse wirkende Kräfte spielfrei eingespannt aufnehmbar ist, um somit in beiden Fällen, das heißt in der Langdreherversion und in der Kurzdreherversion, den Lagerkörper präzise und exakt zur Abstützeinheit anordnen zu können.

Dabei ist es besonders günstig, wenn im Fall der Abstützung der Langdrehführungsbüchse ein Lagerkörper einer Gehäusehülse derselben in der Lagerkörperaufnahme abstützbar ist, so dass die Langdrehführungsbüchse unmittelbar mit ihrer Gehäusehülse eine Abstützung an der Abstützeinheit erfährt.

Ferner ist vorgesehen, dass die Werkstückspindeleinheit in einem vorderen Bereich des Werkstückspindelgehäuses mit einem Lagerkörper einer Abstützeinheit in der Lagerkörperaufnahme abstützbar ist.

Besonders zweckmäßig ist es dabei, um die Z-Achsbewegung der Werkstückspindeleinheit ebenfalls ausnützen zu können, wenn die Abstützeinheit eine den vorderen Bereich des Werkstückspindelgehäuses in Richtung der Werkstückspindelachse verschiebbar aufnehmende Abstützhülse ist.

Ergänzend zu der vorstehend beschriebenen Lösung ist bei einer vorteilhaften Ausführungsform einer Drehmaschine eine präzise Abstützung der Werkstückaufnahme dadurch möglich, dass die Abstützeinheit eine Lagerkörperaufnahme aufweist, in welcher ein die Werkstückaufnahme radial zur Werkstückspindelachse abstützender Lagerkörper lösbar einsetzbar ist und eine radiale Abstützung des Lagerkörpers in der Lagerkörperaufnahme über aufgrund ihrer Querschnittsform elastische Stützkörper erfolgt.

Das Vorsehen derartiger elastischer Stützkörper zur Abstützung der Lagerkörper relativ zur Lagerkörperaufnahme hat den großen Vorteil, dass dadurch einerseits eine starre und sehr steife Fixierung des Lagerkörpers in der Lagerkörperaufnahme möglich ist, andererseits aber auch die notwendige Elastizität hergestellt werden kann, um den Lagerkörper ständig radial zur Werkstückspindelachse wirkenden Kräften auszusetzen und diesen somit spielfrei eingespannt in der Lagerkörperaufnahme zu positionieren.

Die Stützkörper sind dabei vorzugsweise mit einer Querschnittsfläche oder mit zwei Querschnittsflächen versehen, die es erlauben, allein aufgrund ihrer Formvarianz in Abstützrichtung, die notwendige Elastizität zu gewährleisten, wobei die Stützkörper üblicherweise ebenfalls aus demselben Material wie die Lagerkörperaufnahme und der Lagerkörper ausgebildet sind, das heißt üblicherweise aus Stahl sind, um die notwendige Festigkeit und Steifigkeit für die Abstützung des Lagerkörpers zu erhalten.

Hierbei können sich die Stützkörper auf unterschiedlich ausgebildeten Stützflächen abstützen.

So sieht eine vorteilhafte Lösung vor, dass die Stützkörper auf in einem spitzen Winkel zur Werkstückspindelachse verlaufenden Aufnahmestützflächen der Lagerkörperaufnahme abstützbar sind.

Besonders günstig ist es, wenn die Aufnahmestützflächen der Lagerkörperaufnahme konisch zur Werkstückspindelachse verlaufen, so dass sich dadurch dabei insbesondere Kugeln als Stützkörper einsetzen lassen.

Eine andere vorteilhafte Lösung sieht vor, dass die Stützkörper auf in einem spitzen Winkel zur Werkstückspindelachse verlaufenden Lagerkörperstützflächen des Lagerkörpers abstützbar sind.

Vorzugsweise sind dabei die Lagerkörperstützflächen des Lagerkörpers so ausgebildet, dass sie konisch zur Werkstückspindelachse verlaufen.

Bei derartig ausgebildeten Aufnahmestützflächen und Lagerkörperstützflächen lässt sich in einfacher Weise eine elastische Verformung der zwischen den Aufnahmestützflächen und Lagerkörperstützflächen angeordneten Stützkörper beim Einsetzen des Lagerkörpers mit einer zur Werkstückspindelachse parallelen Einsatzrichtung in die Lagerkörperaufnahme erreichen.

Beispielsweise können die Stützkörper als Rollen ausgebildet sein, die aufgrund ihres kreisrunden Querschnitts elastisch verformbar sind.

Besonders vorteilhaft ist es, wenn die Stützkörper als Kugeln ausgebildet sind, da derartige Kugeln, wie im Zusammenhang mit Kugellagern bekannt, durch Druckbeaufschlagung elastisch deformierbar sind.

Bei derartigen, im spitzen Winkel zur Werkstückspindelachse verlaufenden Aufnahmestützflächen und Lagerkörperstützflächen ist die Position des Lagerkörpers in Richtung der Werkstückspindelachse undefiniert.

Aus diesem Grund ist vorzugsweise vorgesehen, dass der Lagerkörper in Richtung der Werkstückspindelachse mit einer Lagerkörperanlagefläche relativ zu einer Aufnahmegegenfläche abgestützt ist.

Auch in diesem Fall wäre es denkbar, zwischen der Lagerkörperanlagefläche und der Aufnahmegegenfläche aufgrund ihrer Querschnittsform elastische Stützkörper vorzusehen, die aufgrund ihrer elastischen Verformung einen Toleranzausgleich zulassen und außerdem eine spielfreie Verspannung auch in Richtung der Werkstückspindelachse ermöglichen.

Aus Gründen der Einfachheit ist jedoch bei einer Ausführungsform vorgesehen, dass der Lagerkörper mit der Lagerkörperanlagefläche unmittelbar an der Aufnahmegegenfläche anliegt.

Hinsichtlich der Durchführung einer Bearbeitung eines Werkstücks in der Langdreherversion und in der Kurzdreherversion wurden bislang keine näheren Angaben gemacht. Bei der Langdreherversion ist es bekannt, dass für die Bearbeitung des Werkstücks die Werkstückspindeleinheit in Richtung einer Z-Achse verfahrbar ist. Bei der Kurzdrehversion könnte für die Bearbeitung des Werkstücks eine Bewegung in Richtung der Z-Achse durch einen Werkzeugträger erfolgen ohne dass eine Bewegung der Werkstückspindeleinheit erforderlich oder möglich ist.

Bei einer erfindungsgemäßen Ausführungsform ist jedoch vorgesehen, dass sowohl in der Langdreherversion als auch in der Kurzdreherversion zur Bearbeitung des Werkstücks die Werkstückspindeleinheit in Richtung einer Z-Achse gesteuert verfahrbar ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Seitenansicht eines ersten Ausführungsbeispiels einer erfindungsgemäßen Drehmaschine in Langdreherversion mit einem Längsschnitt durch eine Werkstückspindeleinheit und eine Langdrehführungsbüchse;
- Fig. 2: einen vergrößerten Schnitt der Fig. 1 im Bereich der Langdrehführungsbüchse und einer Abstützeinheit;
- Fig. 3: eine Seitenansicht mit Längsschnitt ähnlich Fig. 1 eines zweiten Ausführungsbeispiels einer erfindungsgemäßen Drehmaschine in Kurzdreherversion und
- Fig. 4: einen Schnitt ähnlich Fig. 2 eines vorderen Bereichs der Werkstückspindeleinheit und der Abstützeinheit.

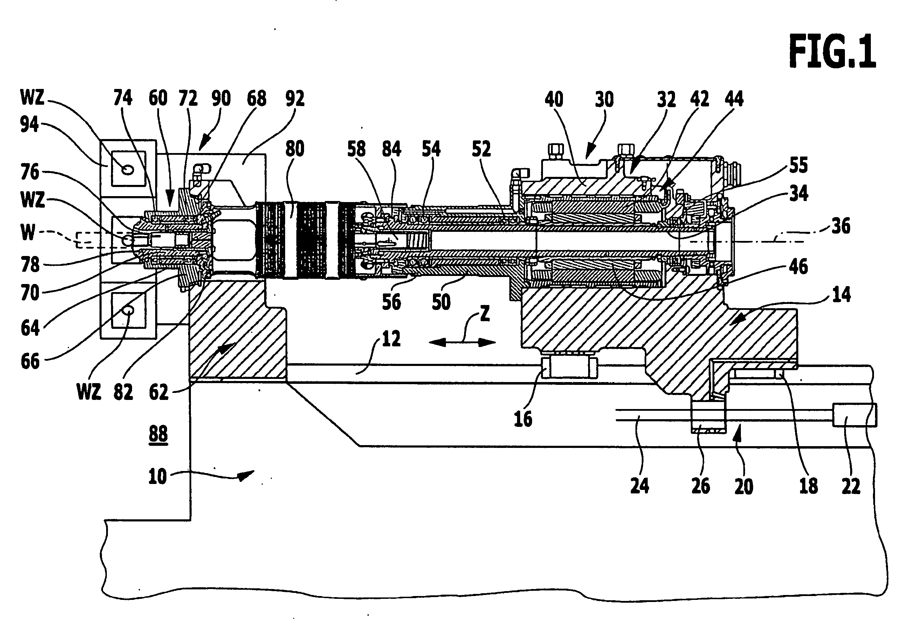

Ein erstes Ausführungsbeispiel einer als Langdreherversion ausgebildeten erfindungsgemäßen Drehmaschine, dargestellt in Fig. 1 umfasst ein als Ganzes mit 10 bezeichnetes Maschinengestell, welches in Richtung einer Z-Achse verlaufende Führungen 12 aufweist, an welchen ein in der Z-Richtung bewegbarer Z-Schlitten 14 verschiebbar mit Führungskörpem 16 und 18 geführt ist.

Ferner ist der Z-Schlitten 14 durch einen Z-Achsantrieb 20 angetrieben bewegbar, wobei der Z-Achsantrieb 20 einen Antriebsmotor 22 eine von diesem angetriebene Gewindespindel 24 und eine mit dem Z-Schlitten fest verbundene Spindelmutter 26 umfasst, so dass bei Antrieb der Gewindespindel 24 durch den Antriebsmotor 22 die Spindelmutter 26 mitsamt dem Z-Schlitten 14 in der Z-Richtung verschiebbar ist.

Auf dem Z-Schlitten 14 sitzt eine als Ganzes mit 30 bezeichnete Werkstückspindeleinheit, welche ein als Ganzes mit 32 bezeichnetes Werkstückspindelgehäuse aufweist, in welchem eine mit 34 bezeichnete Werkstückspindel um eine Werkstückspindelachse 36 drehbar gelagert ist.

Das Werkstückspindelgehäuse 32 umfasst seinerseits einen unmittelbar auf dem Z-Schlitten sitzenden Gehäusekörper 40, in welchem ein Stator 42 eines mit 44 bezeichneten Spindelmotors angeordnet ist, der außerdem einen im Bereich des Stators 42 auf der Werkstückspindel 34 sitzenden und mit dieser mitrotierenden Rotor 46 aufweist.

Das Werkstückspindelgehäuse 32 umfasst ferner eine ausgehend von dem Gehäusekörper 40 sich in Richtung der Werkstückspindelachse 36 erstreckendes und frei auskragend relativ zum Gehäusekörper 40 und zum Z-Schlitten verlaufendes Lagerrohr 50, in welchem ein erstes Spindellager 52 und ein zweites Spindellager 54 angeordnet sind, wobei das erste Spindellager 52 im Anschluss an den Spindelmotor 44 angeordnet ist und das zweite Spindellager 54 auf einer dem Spindelmotor 44 abgewandten Seite des ersten Spindellagers 52.

Das erste Spindellager 52 und das zweite Spindellager 54 dienen zur definierten Führung und drehbaren Lagerung der Werkstückspindel 34 in dem Lagerrohr 50 des Werkstückspindelgehäuses 32, wobei das zweite Spindellager 54 die Werkstückspindel 34 im Bereich eines vorderen Endes 56 des Lagerrohrs 50 und im Bereich einer Spanneinrichtung 58 der Werkstückspindel 34 lagert. Darüber hinaus ist die Werkstückspindel 34 noch mit einem rückwärtigen Spindellager 55 auf einer dem Spindellager 52 abgewandten Seite des Spindelmotors 44 am Gehäusekörper 40 gelagert.

Die Spanneinrichtung 58 dient zur Fixierung eines Werkstücks, vorzugsweise einer Werkstoffstange W, und zwar zur Fixierung der Werkstoffstange gegen eine Bewegung in Richtung der Werkstückspindelachse 36 und zum Drehantrieb der Werkstoffstange W

Das Ausführungsbeispiel der erfindungsgemäßen Drehmaschine, dargestellt in Fig. 1, ist als sogenannte Langdrehmaschine ausgebildet, bei welcher eine Führung des Werkstücks, in diesem Fall der Werkstoffstange W, bei der Bearbeitung durch eine als Ganzes mit 60 bezeichnete Langdrehführungsbüchse erfolgt, die ihrerseits mittels einer Abstützeinheit 62 unmittelbar am Maschinengestell 10 abgestützt ist.

Die Langdrehführungsbüchse 60 umfasst dabei eine Gehäusehülse 64, die einen Lagerkörper 66 trägt, der seinerseits in eine Lagerkörperaufnahme 68 der Abstützeinheit 62 lösbar einsetzbar ist.

In der Gehäusehülse 64 ist eine drehbare Werkstückaufnahme 70 vorgesehen, welche eine in der Gehäusehülse 64 mit zwei Drehlagern 72 und 74 drehbar gelagerte Aufnahmebüchse 76 umfasst, die ihrerseits mit Spannelementen 78 zur spielfreien Aufnahme und präzisen radialen sowie in Richtung der Z-Achse gleitverschieblichen Führung der Werkstoffstange W versehen ist. Vorzugsweise ist die Werkstückaufnahme 70 mit der Werkstückspindel 34 drehfest gekoppelt, und zwar durch ein Teleskoprohr 80, welches sich zwischen einem mit der Werkstückaufnahme 70 verbundenen Halteflansch 82 und einem der Langdrehführungsbüchse 60 zugewandten Frontende 84 der Werkstückspindel 34 erstreckt und dabei mit der Werkstückspindel 34 drehfest gekoppelt ist.

Ferner ist an dem Maschinengestell 10 ein als Ganzes mit 90 bezeichneter Werkzeugträger vorgesehen, welcher beispielsweise als Werkzeugrevolver ausgebildet ist und ein Revolvergehäuse 92 aufweist, das einen drehbaren in einem auf einer der Werkstückspindeleinheit 30 gegenüberliegenden Seite der Abstützeinheit 62 angeordneten Arbeitsraum 88 stehenden Revolverkopf 94 trägt, wobei an dem Revolverkopf 94 einzelne Bearbeitungswerkzeuge WZ angeordnet sind, mit welchen eine Bearbeitung der Werkstoffstange W in dem Arbeitsraum 88 durchführbar ist.

Bei einer Langdrehmaschine erfolgt die präzise Führung der Werkstoffstange W bei der Bearbeitung durch die Werkzeuge 96 mittels der Langdrehführungsbüchse 60, so dass die Langdrehführungsbüchse 60 ihrerseits präzise relativ zum Maschinengestell 10 anzuordnen und zu führen ist.

Das heißt, dass die Langdrehführungsbüchse 60 präzise in der Abstützeinheit 62 positioniert werden muss.

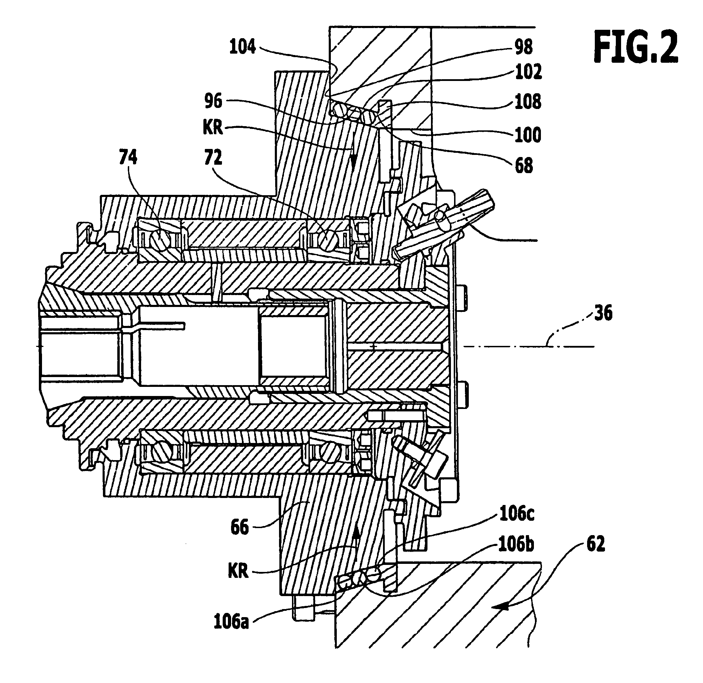

Hierzu umfasst die Abstützeinheit 62, wie in Fig. 2 vergrößert dargestellt, im Bereich der Lagerkörperaufnahme 68 eine konisch zur Werkstückspindelachse 36 verlaufende Aufnahmestützfläche 96, eine senkrecht zur Werkstückspindelachse 36 verlaufende Aufnahmegegenfläche 98, die beispielsweise dem Arbeitsraum 88 zugewandt ist, so wie einen sich an die Aufnahmestützfläche 96 anschließenden und in Richtung der Werkstückspindeleinheit 30 die Abstützeinheit 62 durchsetzenden Durchbruch 100 durch welchen sich das Teleskoprohr 80 hindurch erstreckt.

Ferner umfasst der Lagerkörper 66 der Langdrehführungsbüchse 60 seinerseits eine konisch zur Werkstückspindelachse 36 verlaufende Lagerkörperstützfläche 102 sowie eine senkrecht zur Werkstückspindelachse 36 verlaufende Lagerkörperanlagefläche 104.

Um nun den Lagerkörper 66 möglichst exakt und spielfrei in der Lagerkörperaufnahme 68 ausgerichtet zu halten, sind zwischen der Aufnahmestützfläche 96 und der Lagerkörperstützfläche 102 Stützkörper 106 vorgesehen, die als Rollen, vorzugsweise als Kugeln ausgebildet sind und aufgrund ihrer Querschnittsform bei Beaufschlagung ein elastisches Verhalten zeigen, welches es ermöglicht, dass zwischen der Auflagestützfläche 96 und der Lagerkörperstützfläche 102 eine quer zu diesen verlaufende elastische Kraft wirksam ist, die die Tendenz hat, die Aufnahmestützfläche 96 und die Lagerkörperstützfläche 102 in Richtung einer Vergrößerung des Abstandes zwischen diesen zu beaufschlagen und somit den Lagerkörper 66 im Bereich seiner Lagerkörperstützfläche 102 mit einer radial zur Werkstückspindelachse 36 verlaufenden Kraftkomponente KR zu beaufschlagen, die den Lagerkörper 66 in der Lagerkörperaufnahme 68 spielfrei zentriert hält.

Die axiale Positionierung des Lagerkörpers 66 relativ zur Abstützeinheit 62 mit der Lagerkörperaufnahme 68 erfolgt durch ein unmittelbares Anlegen der Lagerkörperanlagefläche 104 an der Aufnahmegegenfläche 98 ohne zwischen diesen angeordnete elastische Körper, um eine exakte Positionierung des Lagerkörpers 66 in Richtung der Werkstückspindelachse 36 zu erreichen.

Zur relativen Fixierung der Stützkörper 106 zwischen der Aufnahmestützfläche 96 und der Lagerkörperstützfläche 102 sind diese in einem Stützkörperkäfig 108 angeordnet, welcher seinerseits an der Abstützeinheit 62 fixierbar ist.

Die Stützkörper 106 sind dabei vorzugsweise Stahlkugeln, in gleicher Weise wie sie bei Kugellagern verwendet werden.

Dabei können die Stützkörper 106 gleichmäßig in Umfangsrichtung über der Aufnahmestützfläche 96 und der Lagerkörperstützfläche 102 verteilt angeordnet sein oder die Lagerkörper 106 sind in bestimmten Winkelabständen voneinander in Umfangsrichtung angeordnet, beispielsweise in Winkelabständen zwischen 30° und 120°.

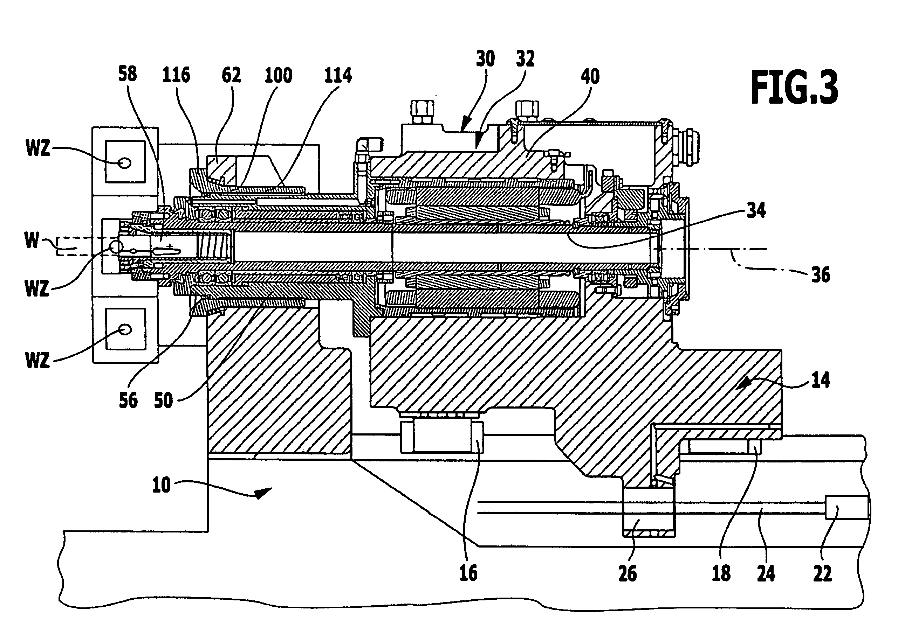

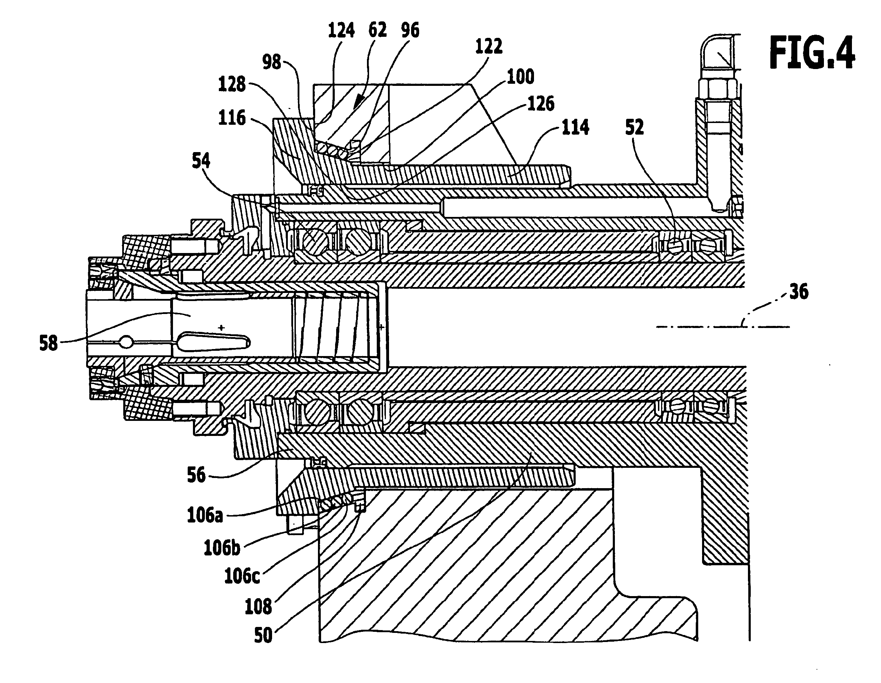

Die Werkzeugmaschine gemäß dem ersten Ausführungsbeispiel, dargestellt in Fig. 1 und 2, kann nun, wie in Fig. 3 und 4 dargestellt, als Kurzdreherversion umgebaut werden, in eine Werkzeugmaschine gemäß einem zweiten Ausführungsbeispiel, wobei bei diesem zweiten Ausführungsbeispiel die Langdrehführungsbüchse 60 demontiert ist und die Werkstückspindeleinheit 30 so weit in Richtung der Abstützeinheit verfahren ist, dass das Lagerrohr 62 des Werkstückspindelgehäuses 32 den Durchbruch 100 der Abstützeinheit 62 durchgreift und mit seinem vorderen Bereich 56 auf einer dem Gehäuse 40 gegenüberliegenden Seite der Abstützeinheit 62 in den Arbeitsraum 88 übersteht, um somit das Werkstück oder die Werkstoffstange W für eine Bearbeitung mit einem der Werkzeuge WZ geeignet zu positionieren.

Dabei wird das Werkstück oder die Werkstoffstange W mittels der Spanneinrichtung 58 der Werkstückspindel 34 fixiert und relativ zum Maschinengestell 10 positioniert.

Um dabei eine insbesondere positionsstabile Abstützung der Werkstückspindel 34 relativ zum Maschinengestell 10 zu erreichen, ist das Lagerrohr 50 in Richtung der Z-Achse verschiebbar in einer Lagerrohrhülse 114 aufgenommen, die mit einem Lagerkörper 116 versehen ist, der seinerseits in gleicher Weise wie der Lagerkörper 66 eine Lagerkörperstützfläche 122 und eine Lagerkörperanlagefläche 124 aufweist, wobei zwischen der Lagerkörperstützfläche 102 und der Aufnahmestützfläche 96 die bereits beschriebenen Stützkörper 106 in dem Stützkörperkäfig 108 angeordnet sind und diese wechselseitig abstützen sowie eine spielfreie Aufnahme des Lagerkörpers 116 in der Lagerkörperaufnahme 68 erlauben.

Die präzise und in Richtung der Z-Achse verschiebliche Führung des Lagerrohrs 50 in der Lagerrohrhülse 114 erfolgt durch eine passgenau bearbeitete Innenfläche 126 der Lagerrohrhülse 114 sowie eine entsprechend passgenau bearbeitete Außenfläche 128 des Lagerrohrs 50, die vorzugsweise geschliffen sind und noch durch zwischen diese eindringendes Schmiermittel entweder hydrostatisch oder hydrodynamisch relativ zueinander exakt geführt sind.

Ferner liegt der Lagerkörper 116 mit seiner Lagerkörperanlagefläche 124 an der Aufnahmegegenfläche 98 an, so dass der Lagerkörper 116 damit in Richtung der Werkstückspindelachse 36 exakt positioniert ist.

Damit besteht die Möglichkeit, lediglich durch Abnehmen der Langdrehführungsbüchse 60 von der Abstützeinheit 62 aus einer als Langdrehmaschine gemäß Fig. 1 und 2 ausgebildeten Drehmaschine eine sogenannte Kurzdrehmaschine zu realisieren, wobei in diesem Fall die exakte Ausrichtung des Werkstücks oder der Werkstoffstange W relativ zu den Werkzeugen WZ ebenfalls dadurch erfolgt, dass eine Abstützung des Lagerrohrs der Werkstückspindel 34 an der Abstützeinheit 62 erfolgt.

Damit ist auch bei Betrieb der Drehmaschine als Kurzdrehmaschine dieselbe Ausrichtung des Werkstücks oder der Werkstoffstange W relativ zu den Werkzeugen WZ sichergestellt.

Sowohl bei der in Fig. 1 und 2 dargestellten Langdreherversion als auch bei der in Fig. 3 und 4 dargestellten Kurzdreherversion besteht die Möglichkeit, durch gesteuertes Verschieben der Werkstückspindeleinheit in Z-Richtung, beispielsweise mit einer computernumerischen Steuerung, die Bewegung des Werkstücks oder der Werkstoffstange W in Richtung der Z-Achse relativ zu den Werkzeugen WZ zu realisieren, so dass in beiden Versionen keine Notwendigkeit besteht, die Werkzeuge WZ in Richtung der Z-Achse zu bewegen, so dass im Minimalfall eine Bewegung der Werkzeuge WZ in einer sogenannten X-Richtung quer zur Werkstückspindelachse 36 ausreichend ist.

Diese Bewegbarkeit der Werkzeuge WZ in der X-Richtung kann noch verbessert werden, durch eine zusätzliche Bewegbarkeit der Werkzeuge WZ in einer quer zur X-Richtung und zur Spindelachse 36 verlaufenden Y-Richtung, was insbesondere beim Einsatz rotierend angetriebener Werkzeuge WZ vorteilhaft ist, um mit diesen ergänzend zu den üblichen Drehbearbeitungswerkzeugen eine Komplettbearbeitung des Werkstücks oder der Werkstoffstange W durchführen zu können.

## Patentansprüche

1. Drehmaschine umfassend ein Maschinengestell (10), eine an dem Maschinengestell (10) angeordnete Werkstückspindeleinheit (30) mit einem Werkstückspindelgehäuse (32) und mit einer in dem Werkstückspindelgehäuse (32) um eine Werkstückspindelachse (36) rotierend antreibbaren Werkstückspindel (34), eine am Maschinengestell (10) angeordnete Abstützeinheit (62) mit einer Lagerkörperaufnahme (68), in welcher in einer Langdreherversion der Drehmaschine eine Langdrehführungsbüchse (60) im Bereich ihrer Werkstückaufnahme (78) radial zur Werkstückspindelachse (36) am Maschinengestell (10) abstützbar und um die Werkstückspindelachse (36) drehbar ist,
**dadurch gekennzeichnet, dass** in der
Lagerkörperaufnahme (68) in einer Kurzdreherversion der Drehmaschine die Werkstückspindeleinheit (30) durch Abstützung eines Lagerrohrs (50) des Werkstückspindelgehäuses (32) im Bereich ihrer Werkstückaufnahme (58) radial zur Werkstückspindelachse (36) abstützbar ist.

2. Drehmaschine nach Anspruch 1, **dadurch gekennzeichnet, dass** in die Lagerkörperaufnahme (68) ein die Langdrehführungsbüchse (60) oder ein die Werkstückspindeleinheit (30) abstützender Lagerkörper (66, 116) lösbar einsetzbar ist.

3. Drehmaschine nach Anspruch 2, **dadurch gekennzeichnet, dass** der Lagerkörper (66, 116) in der Lagerkörperaufnahme (68) durch radial zur Werkstückspindelachse (36) wirkende Kräfte (KR) spielfrei eingespannt aufnehmbar ist.

4. Drehmaschine nach einem der voranstehenden Ansprüche , **dadurch gekennzeichnet, dass** die Langdrehführungsbüchse (60) mit einem Lagerkörper (66) einer Gehäusehülse (64) derselben in der Lagerkörperaufnahme (68) abstützbar ist.

5. Drehmaschine nach einem der voranstehenden Ansprüche, **dadurch gekennzeichnet, dass** die Werkstückspindeleinheit (30) in dem vorderen Bereich (56) des Werkstückspindelgehäuses (32) mit einem Lagerkörper (116) einer Abstützeinheit (114) in der Lagerkörperaufnahme (68) abstützbar ist.

6. Drehmaschine nach Anspruch 5, **dadurch gekennzeichnet, dass** die Abstützeinheit (114) eine den vorderen Bereich (56) des Werkstückspindelgehäuses (32) in Richtung der Werkstückspindelachse (36) verschiebbar aufnehmende Abstützhülse (114) ist.

7. Drehmaschine nach einem der voranstehenden Ansprüche, **dadurch gekennzeichnet, dass** die Abstützeinheit (62) eine Lagerkörperaufnahme (68) aufweist, in welcher ein die Werkstückaufnahme (58, 78) radial zur Werkstückspindelachse (36) abstützender Lagerkörper (66, 116) lösbar einsetzbar ist und dass eine radiale Abstützung des Lagerkörpers (66, 116) in der Lagerkörperaufnahme (68) über aufgrund ihrer Querschnittsform elastische Stützkörper (106) erfolgt.

8. Drehmaschine nach Anspruch 7, **dadurch gekennzeichnet, dass** die Stützkörper (106) auf in einem spitzen Winkel zur Werkstückspindelachse (36) verlaufenden Aufnahmestützflächen (96) der Lagerkörperaufnahme (68) abstützbar sind.

9. Drehmaschine nach Anspruch 7 oder 8, **dadurch gekennzeichnet, dass** die Aufnahmestützflächen (96) der Lagerkörperaufnahmen (68) konisch zur Werkstückspindelachse (36) verlaufen.

10. Drehmaschine nach einem der Ansprüche 7 bis 9, **dadurch gekennzeichnet, dass** die Stützkörper (106) auf in einem spitzen Winkel zur Werkstückspindelachse (36) verlaufenden Lagerkörperstützflächen (102) des Lagerkörpers (66, 116) abstützbar sind.

11. Drehmaschine nach Anspruch 7 bis 10, **dadurch gekennzeichnet, dass** die Lagerkörperstützflächen (102) des Lagerkörpers (66, 116) konisch zur Werkstückspindelachse (36) verlaufen.

12. Drehmaschine nach einem der Ansprüche 7 bis 11, **dadurch gekennzeichnet, dass** die Stützkörper (106) als Kugeln ausgebildet sind.

13. Drehmaschine nach einem der voranstehenden Ansprüche, **dadurch gekennzeichnet, dass** der Lagerkörper (66, 116) in Richtung der Werkstückspindelachse (36) mit einer Lagerkörperanlagefläche (104) relativ zu einer Aufnahmegegenfläche (98) abgestützt ist.

14. Drehmaschine nach Anspruch 13, **dadurch gekennzeichnet, dass** der Lagerkörper (66, 116) mit der Lagerkörperanlagefläche (104) unmittelbar an der Aufnahmegegenfläche (98) anliegt.

15. Drehmaschine nach einem der voranstehenden Ansprüche, **dadurch gekennzeichnet, dass** zur Bearbeitung des Werkstücks (W) sowohl in der Langdreherversion als auch in der Kurzdreherversion die Werkstückspindeleinheit (30) in Richtung einer Z-Achse gesteuert verfahrbar ist.

## Claims

1. Lathe comprising a machine frame (10), a workpiece spindle unit (30) arranged on the machine frame (10) and having a workpiece spindle housing (32) and a workpiece spindle (34) rotatingly drivable about a workpiece spindle axis (36) in the workpiece spindle housing (32), a supporting unit (62) arranged on the machine frame (10) with a bearing member receptacle (68), in a longitudinal turning version of the lathe a guide bushing for longitudinal turning (60) being supportable in said receptacle on the machine frame (10) radially to the workpiece spindle axis (36) in the region of its workpiece receptacle (78) and being rotatable about the workpiece spindle axis (36),
**characterized in that** in a short turning version of the lathe the workpiece spindle unit (30) is supportable in the bearing member receptacle (68) as a result of support of a bearing tube (50) of the workpiece spindle housing (32) in the region of its workpiece receptacle (58) radially to the workpiece spindle axis (36).

2. Lathe as defined in claim 1, **characterized in that** a bearing member (66, 116) supporting the guide bushing for longitudinal turning (60) or the workpiece spindle unit (30) is releasably insertable into the bearing member receptacle (68).

3. Lathe as defined in claim 2, **characterized in that** the bearing member (66, 116) is adapted to be accommodated in the bearing member receptacle (68) in a clearance-free, clamped manner as a result of forces (KR) acting radially to the workpiece spindle axis (36).

4. Lathe as defined in any one of the preceding claims, **characterized in that** the guide bushing for longitudinal turning (60) is supportable in the bearing member receptacle (68) with a bearing member (66) of a housing sleeve (64) thereof.

5. Lathe as defined in any one of the preceding claims, **characterized in that** the workpiece spindle unit (30) is supportable in the bearing member receptacle (68) in the forward area (56) of the workpiece spindle housing (32) with a bearing member (116) of a supporting unit (114).

6. Lathe as defined in claim 5, **characterized in that** the supporting unit (114) is a supporting sleeve (114) accommodating the forward area (56) of the workpiece spindle housing (32) for displacement in the direction of the workpiece spindle axis (36).

7. Lathe as defined in any one of the preceding claims, **characterized in that** the supporting unit (62) has a bearing member receptacle (68), a bearing member (66, 116) supporting the workpiece receptacle (58, 78) radially to the workpiece spindle axis (36) being releasably insertable into said receptacle, and that a radial support of the bearing member (66, 116) in the bearing member receptacle (68) is brought about via supporting members (106) elastic on account of their cross-sectional shape.

8. Lathe as defined in claim 7, **characterized in that** the supporting members (106) are supportable on supporting surfaces (96) of the bearing member receptacle (68) extending at an acute angle in relation to the workpiece spindle axis (36).

9. Lathe as defined in claim 7 or 8, **characterized in that** the supporting surfaces (96) of the bearing member receptacles (68) extend conically in relation to the workpiece spindle axis (36).

10. Lathe as defined in any one of claims 7 to 9, **characterized in that** the supporting members (106) are supportable on supporting surfaces (102) of the bearing member (66, 116) extending at an acute angle in relation to the workpiece spindle axis (36).

11. Lathe as defined in claim 7 to 10, **characterized in that** the supporting surfaces (102) of the bearing member (66, 116) extend conically in relation to the workpiece spindle axis (36).

12. Lathe as defined in any one of claims 7 to 11, **characterized in that** the supporting members (106) are designed as spheres.

13. Lathe as defined in any one of the preceding claims, **characterized in that** the bearing member (66, 116) is supported relative to a receptacle counter surface (98) with a bearing member contact surface (104) in the direction of the workpiece spindle axis (36).

14. Lathe as defined in claim 13, **characterized in that** the bearing member (66, 116) abuts directly on the receptacle counter surface (98) with the bearing member contact surface (104).

15. Lathe as defined in any one of the preceding claims, **characterized in that** the workpiece spindle unit (30) is adapted to travel in the direction of a Z axis in a controlled manner for the machining of the workpiece (W) both in the longitudinal turning version and in the short turning version.

## Revendications

1. Tour comprenant un bâti de machine (10), une unité de broche porte-pièce (30) disposée sur le bâti de machine (10) avec un boîtier de broche porte-pièce (32) et avec une broche porte-pièce (34) pouvant être entraînée en rotation autour d'un axe de broche porte-pièce (36) dans le boîtier de broche porte-pièce (32), une unité de soutien (62) disposée sur le bâti de machine (10) avec un logement de corps de palier (68), dans lequel, dans une version de tournage long du tour, une bague de guidage de tournage long (60) peut être appuyée sur le bâti de machine (10) radialement à l'axe de broche porte-pièce (36) dans la région de son logement de pièce (78) et peut tourner autour de l'axe de broche porte-pièce (36), **caractérisé en ce que**, dans une version de tournage court du tour, l'unité de broche porte-pièce (30) peut s'appuyer dans le logement de corps de palier (68) par le soutien d'un tube de palier (50) du boîtier de broche porte-pièce (32) dans la région de son logement de pièce (58) radialement à l'axe de broche porte-pièce (36).

2. Tour selon la revendication 1, **caractérisé en ce qu'**un corps de palier (66, 116) soutenant la bague de guidage de tournage long (60) ou l'unité de broche porte-pièce (30) peut être inséré de façon séparable dans le logement de corps de palier (68).

3. Tour selon la revendication 2, **caractérisé en ce que** le corps de palier (66, 116) peut être logé de façon encastrée sans jeu dans le logement de corps de palier (68) par des forces (KR) agissant radialement à l'axe de broche porte-pièce (36).

4. Tour selon l'une quelconque des revendications précédentes, **caractérisé en ce que** la bague de guidage de tournage long (60) peut être soutenue avec un corps de palier (66) d'une douille de boîtier (64) de celle-ci dans le logement de corps de palier (68).

5. Tour selon l'une quelconque des revendications précédentes, **caractérisé en ce que** l'unité de broche porte-pièce (30) peut être soutenue dans la région avant (56) du boîtier de broche porte-pièce (32) avec un corps de palier (116) d'une unité de soutien (114) dans le logement de corps de palier (68).

6. Tour selon la revendication 5, **caractérisé en ce que** l'unité de soutien (114) est une douille de soutien (114) contenant la région avant (56) du boîtier de broche porte-pièce (32) de façon déplaçable dans la direction de l'axe de broche porte-pièce (36).

7. Tour selon l'une quelconque des revendications précédentes, **caractérisé en ce que** l'unité de soutien (62) présente un logement de corps de palier (68), dans lequel un corps de palier (66, 116) soutenant le logement de pièce (58, 78) radialement à l'axe de broche porte-pièce (36) peut être inséré de façon séparable et **en ce qu'**un soutien radial du corps de palier (66, 116) dans le logement de corps de palier (68) est assuré au moyen de corps de soutien (106) élastiques en raison de la forme de leur section transversale.

8. Tour selon la revendication 7, **caractérisé en ce que** les corps de soutien (106) peuvent s'appuyer sur des faces d'appui de logement (96) du logement de corps de palier (68) s'étendant sous un angle aigu par rapport à l'axe de broche porte-pièce (36).

9. Tour selon la revendication 7 ou 8, **caractérisé en ce que** les faces d'appui de logement (96) des logements de corps de palier (68) sont de forme conique par rapport à l'axe de broche porte-pièce (36).

10. Tour selon l'une quelconque des revendications 7 à 9, **caractérisé en ce que** les corps de soutien (106) peuvent s'appuyer sur des faces d'appui de corps de palier (102) du corps de logement (66, 116) s'étendant sous un angle aigu par rapport à l'axe de broche porte-pièce (36).

11. Tour selon l'une quelconque des revendications 7 à 10, **caractérisé en ce que** les faces d'appui de corps de palier (102) du corps de palier (66, 116) sont de forme conique par rapport à l'axe de broche porte-pièce (36).

12. Tour selon l'une quelconque des revendications 7 à 11, **caractérisé en ce que** les corps de soutien (106) sont réalisés sous forme de billes.

13. Tour selon l'une quelconque des revendications précédentes, **caractérisé en ce que** le corps de palier (66, 116) est appuyé avec une face d'appui de corps de palier (104) par rapport à une face opposée du logement (98) dans la direction de l'axe de broche porte-pièce (36).

14. Tour selon la revendication 13, **caractérisé en ce que** le corps de palier (66, 116) s'applique avec la face d'appui de corps de palier (104) directement sur la face opposée du logement (98).

15. Tour selon l'une quelconque des revendications précédentes, **caractérisé en ce que** l'unité de broche porte-pièce (30) est déplaçable de façon commandée dans la direction d'un axe Z pour l'usinage de la pièce (W) aussi bien en version de tournage long qu'en version de tournage court.
